# EUROPÄISCHE PATENTANMELDUNG

(11) **EP 1 650 111 A1**
(43) Veröffentlichungstag der Anmeldung: **26.04.2006**
(21) Anmeldenummer: 05013951.8
(22) Anmeldetag: 28.06.2005
(51) Int. Cl.: B62D 25/16

(54) **Kotflügel**

(30) Priorität: 21.10.2004 DE 102004051312
(71) Anmelder: REHAU AG + Co, 95111 Rehau (DE)
(72) Erfinder: Herrmann, Stefan, 95111 Rehau (DE); Pfretzschner, Tobias, 95032 Hof (DE)

(57) **Zusammenfassung**

Ein Kotflügel (1) hat einen Außenhautabschnitt (3), der über einen Spaltbegrenzungsabschnitt (4) mit einem Fahrzeugtür-Außenabschnitt (5) fluchtend angeordnet werden kann. Einer Fahrzeugtür ist ein stirnseitiger Verbindungsabschnitt (6) des Kotflügels (1) zugewandt. Der Verbindungsabschnitt (6) ist über einen Befestigungs-Flanschabschnitt (7), der gegenüber dem Außenhautabschnitt (3) nach innen versetzt ist, an einem Fahrzeugrahmen festlegbar. Der Verbindungsabschnitt (6) hat einen Rücksprungbereich (10) derart, dass der Verbindungsabschnitt (6), benachbart zum Befestigungs-Flanschabschnitt (7), von einer Spaltebene (11) senkrecht zur Außenhaut weiter beabstandet ist als der Spalt-Begrenzungsabschnitt (4). Benachbart zum Befestigungs-Flanschabschnitt (7) weist der Verbindungsabschnitt (6) ein Verstärkungselement (13) derart auf, dass der Kotflügel (1) hinsichtlich einer Verlagerung des Außenhautabschnitts (3) relativ zum Verbindungsabschnitt (6) gesichert ist. Es resultiert ein Kotflügel, bei dem es auch dann, wenn der Außenhautabschnitt einer Längenänderung unterworfen ist, nicht zu einer optischen Beeinträchtigung im Übergangsbereich zur Fahrzeugtür kommt.

## Beschreibung

Die Erfindung betrifft einen Kotflügel nach dem Oberbegriff des Anspruchs 1.

Ein derartiger Kotflügel ist durch offenkundige Vorbenutzung bekannt.
Der Rücksprungbereich ist erforderlich, um bei bestimmten Schwenkgeometrien der Fahrzeugtür beim Öffnen von dieser einen Schwenkraum im Übergangsbereich zwischen dem Kotflügel und der Fahrzeugtür zu schaffen. Wenn ein derartiger Kotflügel aus einem Material gefertigt ist, welches einer Längenveränderung unterworfen ist, ergeben sich beim bekannten Kotflügel Nachteile, die nicht toleriert werden können. Zum Einen resultiert aus derartigen Längenänderungen eine optische Beeinträchtigung, da im Übergangsbereich zwischen dem Kotflügel und der Fahrzeugtür die einander benachbarten Außenhautabschnitte der Tür einerseits und des Kotflügels andererseits nicht mehr exakt miteinander fluchten. Andererseits kann als Folge einer derartigen Längenänderung der Kotflügel im Bereich des Verbindungsabschnitts in den notwendigen Schwenkraum eindringen, was unbedingt vermieden werden muss, da sonst ein freies Aufschwenken der Fahrzeugtür nicht mehr möglich ist.

Es ist daher eine Aufgabe der vorliegenden Erfindung, einen Kotflügel der eingangs genannten Art derart weiterzubilden, dass Längenänderungen des Außenhautabschnitts den optischen Gesamteindruck und ein freies Aufschwenken der Fahrzeugtür nicht beeinträchtigen.

Diese Aufgabe ist erfindungsgemäß gelöst durch einen Kotflügel mit den im Kennzeichnungsteil des Anspruchs 1 angegebenen Merkmalen.

Erfindungsgemäß wurde erkannt, dass ein Verstärkungselement im Bereich des Befestigungs-Flanschabschnitts verhindert, dass der Verbindungsabschnitt auf eine Längenänderung des Außenhautabschnitts hin eine Schwenkbewegung um den Befestigungs-Flanschabschnitt vollführt.

Diese Schwenkbewegung, die, wie erfindungsgemäß erkannt wurde, aufgrund des erheblichen Hebelarms wegen der beim gattungsgemäßen Kotflügel nach innen versetzten Befestigung resultierte, war die Ursache für die Beeinträchtigung des optischen Erscheinungsbildes im Spaltbereich zwischen dem Kotflügel und der Fahrzeugtür und auch die Ursache dafür, dass im ungünstigen Fall der Kotflügel in den Schwenkraum eindringen konnte. Diese Schwenkbewegung wird aufgrund des Verstärkungselementes verhindert, da ein Nachgeben des Verbindungsabschnittes dort, wo die größten Hebelkräfte auftreten, nämlich benachbart zum Befestigungs-Flanschabschnitt, nicht mehr möglich ist. Eine Längenänderung des Außenhautabschnitts führt daher allenfalls zu einer geringfügigen Änderung des Spaltmaßes zwischen dem Kotflügel und der Fahrzeugtür, nicht aber zu einer optischen Beeinträchtigung oder zu einer Störung des freien Aufschwenkens.

Verstärkungsrippen nach Anspruch 2 führen zu einer effizienten Sicherung gegen eine unerwünschte Verlagerungsbewegung. Gleichzeitig können die Verstärkungsrippen hinsichtlich ihrer Geometrie und ihres Volumens so gestaltet sein, dass eine Spritzgussherstellung des die Verstärkungsrippen aufweisenden Kotflügels möglich ist.

Versteifungssicken nach Anspruch 3 bieten eine alternative oder zusätzliche Möglichkeit zur Sicherung des Kotflügels gegen eine Verlagerung des Außenhautabschnitts relativ zum Befestigungs-Flanschabschnitt.

Eine Anordnung nach Anspruch 4 kombiniert die Verstärkungs- bzw. Versteifungswirkung der Rippen und der Sicken.

Ein Überstand der Rippen nach Anspruch 5 vermeidet, dass der Schwenkraum durch die Verstärkungsrippen eingeschränkt wird.

Materialien nach Anspruch 6 haben sich zur Herstellung eines Kotflügels mit rückspringendem Verbindungsabschnitt aufgrund der thermischen Eigenschaften und der Stabilitätseigenschaften dieser Materialien als besonders geeignet herausgestellt. Weitere geeignete Materialien für den Kotflügel sind: PP EPDM-TV (talkumverstärktes Polypropylen mit Ethylen-Propylen-Dien-Kautschuk), PC PBT (Polycarbonat mit Polybutylenterephthalat), PC PET (Polycarbonat mit Polyethylenterephthalat), Blends aus PA PPO (Polyamid mit Polypropylenoxid), PA ABS (Polyamid mit Acrylnitril/Butadien/Styrol), Blends aus PA ABS (Polyamid mit Acrylnitril/Butadien/Styrol), Blends aus PA (Polyamid) als Thermoplaste.

Als Schaummaterialien sind für den Kotflügel insbesondere diejenigen geeignet, die sich mittels RRIM (Reinforced Reaction Injection Molding) herstellen lassen. Als Duroplastmaterialien sind insbesondere SMC- (Sheat Molding Compound)-Materialien geeignet.

Ein Ausführungsbeispiel der Erfindung wird nachfolgend anhand der Zeichnungen näher erläutert. In dieser zeigen:
- Fig. 1: eine perspektivische Ansicht eines Kotflügels und einer Fahrzeugtür eines Kraftfahrzeugs, gesehen von innen, wobei lediglich ein Abschnitt des Kotflügels unterhalb einer horizontal verlaufenden Schnittebene dargestellt ist;
- Fig. 2: eine Ausschnittsvergrößerung aus Fig. 1;
- Fig. 3: eine zu Fig. 2 ähnliche Ansicht aus einem anderen Blickwinkel.

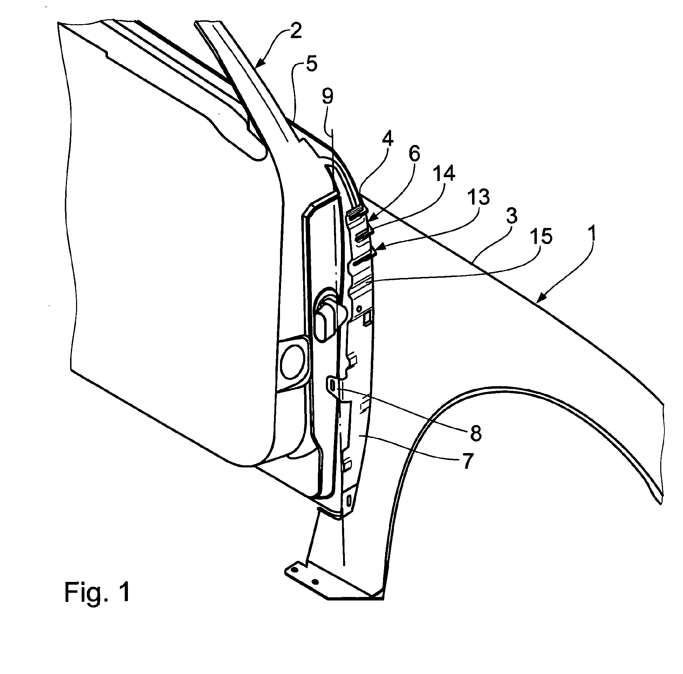

Fig. 1 bis 3 zeigen eine Innenansicht von Karosserieelementen eines ansonsten nicht dargestellten Kraftfahrzeugs. Ein Kotflügel 1 grenzt hierbei an eine Fahrzeugtür 2 an. Ein Außenhautabschnitt 3 des Kotflügels 1 ist über einen Spalt-Begrenzungsabschnitt 4 des Kotflügels 1 fluchtend zu einem Fahrzeugtür-Außenabschnitt 5 so angeordnet, dass die beiden Außenhautabschnitte 3, 5 fließend ineinander übergehen.

Der Fahrzeugtür 2 zugewandt weist der Kotflügel 1 einen stirnseitigen Verbindungsabschnitt 6 auf. Letzterer ist über einen Befestigungs-Flanschabschnitt 7 an einem nicht dargestellten Fahrzeugrahmen festgelegt. Hierzu dient beispielsweise eine in Fig. 1 dargestellte Befestigungsöse 8. Gegenüber dem Außenhautabschnitt 3 ist der Befestigungs-Flanschabschnitt 7 um einen Abstand nach innen, also zum Fahrzeuginneren hin, versetzt, der beim dargestellten Ausführungsbeispiel etwa 50 mm beträgt. Etwa auf Höhe des Befestigungs-Flanschabschnitts 7 liegt eine vertikale Schwenkachse 9 der Schwenkbewegung der Fahrzeugtür 2 relativ zum Fahrzeugrahmen bei der Verlagerung zwischen einer Offen- und einer Schließstellung.

Neben dem Befestigungs-Flanschabschnitt 7 weist der Verbindungsabschnitt 6 einen Rücksprungbereich 10 auf, welcher den Spalt-Begrenzungsabschnitt 4 mit dem Befestigungs-Flanschabschnitt 7 verbindet.

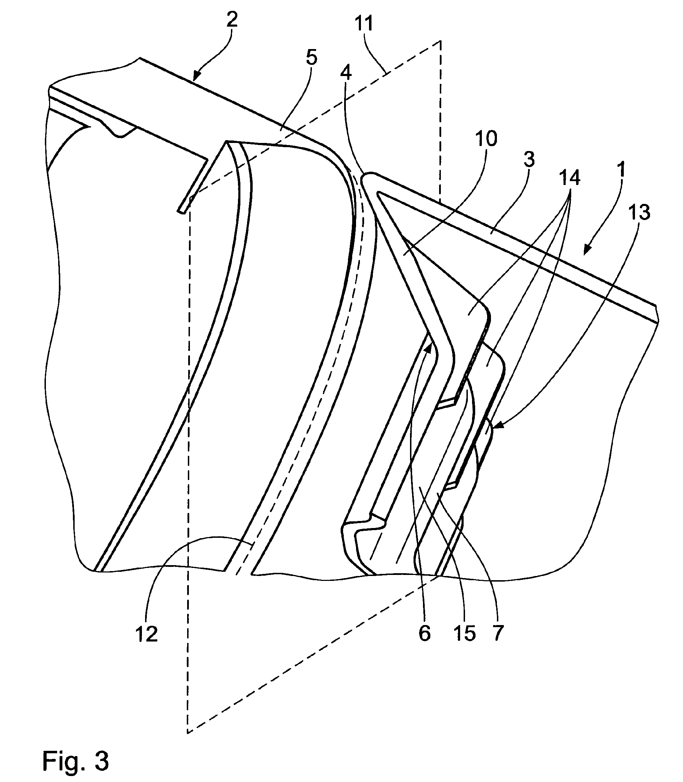

Aufgrund des Rücksprungbereiches 10, der zum Außenhautabschnitt 3 einen spitzen Winkel einnimmt, ist der Verbindungsabschnitt 6 benachbart zum Befestigungs-Flanschabschnitt 7 vom Spalt zwischen dem Kotflügel 1 und der Fahrzeugtür 2 weiter entfernt als der Spalt-Begrenzungsabschnitt 4. Dies ist in Fig. 3 verdeutlicht. Dort ist eine Spaltebene 11 angedeutet, die senkrecht auf der von der Außenhaut in diesem Bereich vorgegebenen Fläche steht und diese Fläche längs einer Spaltverlaufslinie 12 schneidet, die in Fig. 3 gestrichelt angedeutet ist. Der Befestigungs-Flanschabschnitt 7 ist von der Spaltebene 11 aufgrund des Rücksprungs durch den Rücksprungbereich 10 weiter beabstandet als der Spalt-Begrenzungsabschnitt 4 von der Spaltebene 11. Aufgrund des Rücksprungbereiches 10 entsteht um die Schwenkachse 9 ein vergrößerter Schwenkraum, in den die Fahrzeugtür 2 beim Öffnen einschwenken kann.

Benachbart zum Befestigungs-Flanschabschnitt 7 weist der Verbindungsabschnitt 6 des Kotflügels 1 ein Verstärkungselement 13 mit insgesamt drei in der Zeichnung dargestellten Verstärkungsrippen 14 auf. Bei eingebautem Kotflügel 1 verlaufen die Rippenebenen der Verstärkungsrippen 14 horizontal, also senkrecht zur Schwenkachse 9. Die Verstärkungsrippen 14 sind am Verbindungsabschnitt 6 angeformt und erstrecken sich vom Befestigungs-Flanschabschnitt 7 über einen Großteil des Rücksprungbereiches 10 bis nahe zum Spalt-Begrenzungsabschnitt 4 hin. Die Verstärkungsrippen 14 sind also am Übergang zwischen dem Befestigungs-Flanschabschnitt 7 und dem Rücksprungbereich 10 angeordnet.

Die Verstärkungsrippen 14 sind übereinander angeordnet, wobei sie der Kontur des rückspringenden Verbindungsabschnittes 6 folgen.

Hin zum Spalt-Begrenzungsabschnitt 4 verjüngen sich die Verstärkungsrippen 14. Die Verstärkungsrippen 14 stehen über den Verbindungsabschnitt 6 auf der von der Spaltebene 11 abgewandten Seite, also von der Fahrzeugtür 2 weg, über.

Ferner weist der Befestigungs-Flanschabschnitt 7 eine Mehrzahl von Versteifungssicken 15 auf. Letztere verlaufen horizontal und laufen am Übergang zwischen dem Befestigungs-Flanschabschnitt 7 und dem Rücksprungbereich 10 aus. Die Verstärkungsrippen 14 sind im Bereich des Befestigungs-Flanschabschnitts 7 jeweils in einer der Versteifungssicken 15 angeordnet.

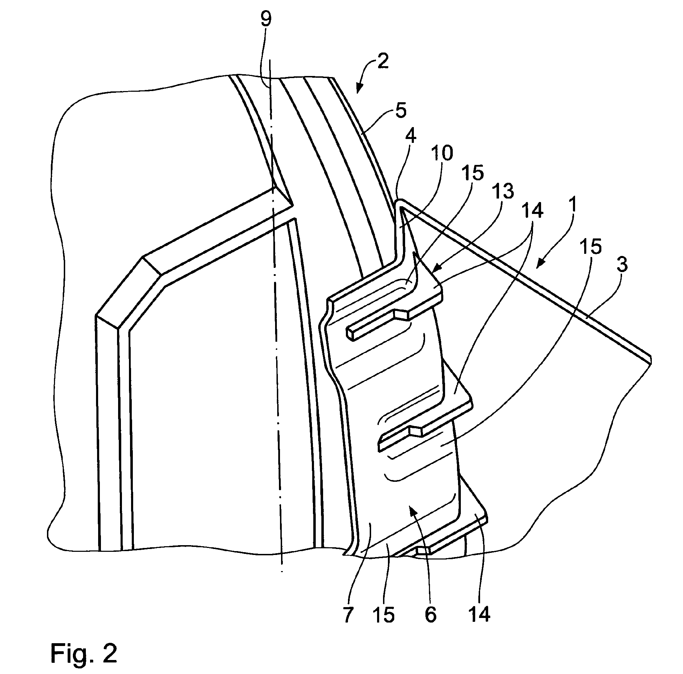

Die Versteifungssicken 15 haben einen wannenförmigen Querschnitt. Wie den Fig. 1 und 2 zu entnehmen ist, sind einzelne der Versteifungssicken 15 nicht durchgängig im Befestigungs-Flanschabschnitt 7 ausgeführt, sondern laufen innerhalb des Befestigungs-Flanschabschnitts 7 aus. Eine derartige Versteifungssicke 15 ist die in den Fig. 1 und 2 zweite von oben.

Der Kotflügel 1 ist gefertigt aus Kunststoff, insbesondere aus dem Material PP EPDM (Polypropylen mit Ethylen-Propylen-Dien-Kautschuk). Alternativ kann der Kotflügel z. B. auch aus PA PPO (Polyamid mit Polypropylenoxid) gefertigt sein.

Das Verstärkungselement 13 mit den Verstärkungsrippen 14 und den Versteifungssicken 15 hat folgende Funktion: Damit die Fahrzeugtür 2 beim Öffnen um die Schwenkachse 9 aufschwenken kann, muss der Kotflügel 1 mit dem Rücksprungbereich 10 so geformt sein, dass hierzu ein ausreichender Schwenkraum zur Verfügung steht. Aufgrund der Befestigung über dem Befestigungs-Flanschabschnitt 7 am Fahrzeugrahmen, beabstandet zum Außenhautabschnitt 3, führt eine z.B. thermisch bedingte Ausdehnung oder Kontraktion des Außenabschnitts 3 zu einem Hebelmoment, der am Verbindungsabschnitt 6 anliegt. Das Verstärkungselement 13 verhindert, dass sich aufgrund dieser Längenänderung der Außenhautabschnitt 3 relativ zum Befestigungs-Flanschabschnitt 7 verlagert, insbesondere eine Schwenkbewegung um eine zur Schwenkachse 9 parallele Achse vollführt. Damit ist trotz einer möglichen Längenänderung der optisch saubere Übergang zwischen dem Außenhautabschnitt 3 und dem Fahrzeugtür-Außenabschnitt 5 gewährleistet. Zudem ist sichergestellt, dass der Außenhautabschnitt 3 im Bereich des Verbindungsabschnitts 6 nicht zum Fahrzeuginneren hin einschwenkt und dadurch unerwünscht in den Schwenkraum eindringt.

## Patentansprüche

1. Kotflügel (1)
- mit einem Außenhautabschnitt (3), der über einem Spalt-Begrenzungsabschnitt (4) zu einem Fahrzeugtür-Außenabschnitt (5) fluchtend angeordnet werden kann,
- mit einem einer Fahrzeugtür (2) zuwendbaren stirnseitigen Verbindungsabschnitt (6), welcher über einen Befestigungs-Flanschabschnitt (7), der gegenüber dem Außenhautabschnitt (3) nach innen versetzt ist, an einem Fahrzeugrahmen festlegbar ist,
- wobei der Verbindungsabschnitt (6) einen Rücksprungbereich (10) derart aufweist, dass der Verbindungsabschnitt (6) benachbart zum Befestigungs-Flanschabschnitt (7) von einer senkrecht zum Außenhautabschnitt (3) angeordneten Spaltebene (11) weiter beabstandet ist als der Spalt-Begrenzungsabschnitt (4),
**dadurch gekennzeichnet, dass**
- der Verbindungsabschnitt (6) benachbart zum Befestigungs-Flanschabschnitt (7) ein Verstärkungselement (13) derart aufweist, dass der Kotflügel (1) hinsichtlich einer Verlagerung des Außenhautabschnitts (3) relativ zum Befestigungs-Flanschabschnitt (7) gesichert ist.

2. Kotflügel nach Anspruch 1, **dadurch gekennzeichnet, dass** das Verstärkungselement (13) eine Mehrzahl von Verstärkungsrippen (14) am Übergang zwischen dem Befestigungs-Flanschabschnitt (7) und dem Rücksprungbereich (10) aufweist.

3. Kotflügel nach Anspruch 1 oder 2, **dadurch gekennzeichnet, dass** das Verstärkungselement (13) eine Mehrzahl von Versteifungssicken (15) am Übergang zwischen dem Befestigungs-Flanschabschnitt (7) und dem Rücksprungbereich (10) aufweist.

4. Kotflügel nach Anspruch 2 oder 3, **dadurch gekennzeichnet, dass** jeweils eine Verstärkungsrippe (14) in einer Versteifungssicke (15) angeordnet ist.

5. Kotflügel nach einem der Ansprüche 1 bis 4, **dadurch gekennzeichnet, dass** die Verstärkungsrippen (14) über den Verbindungsabschnitt (6) nur auf der von der Spaltebene (11) abgewandten Seite überstehen.

6. Kotflügel nach einem der Ansprüche 1 bis 5, **dadurch gekennzeichnet, dass** er aus PP EPDM oder aus PA PPO besteht.
